# EUROPEAN PATENT APPLICATION

(11) **EP 1 887 412 A1**
(43) Date of publication of application: **13.02.2008**
(21) Application number: 06746606.0
(22) Date of filing: 18.05.2006
(51) Int. Cl.: G02B 26/10, B41J 2/44, B81B 3/00, G02B 26/08

(54) **OPTICAL DEFLECTION ELEMENT**

(30) Priority: 23.05.2005 JP 2005149481
(71) Applicant: Micro Precision Co. & Ltd., Tokyo 1050011 (JP)
(72) Inventor: KAGAWA, Kenichi, i, Kanagawa; 2110068 (JP); ASADA, Norihiro, un, Saitama; 3440115 (JP)
(74) Representative: Weiss, Peter
(86) International application number: PCT/JP2006/309921
(87) International publication number: WO 2006/126443

(57) **Abstract**

The present invention can provide a downsized optical deflecting element having less operating fluctuations at low cost and further it can be actuated at lower frequencies and at wider deflecting angles. The optical deflecting element comprises a base component having magnets therein; a soft resin component comprising a fixed part adhered to the base component and a movable part having a coil therein supported by the fixed part via a pair of beams; and a reflector plate 3 adhered on to the movable part. The soft resin component consists of a first insulating resin part 2-1 and second conductive resin part 2-2 for electrical wiring.

## Description

### Field of the Invention

The present invention relates to an optical deflecting element actuating at lower frequencies, particularly relates to its electrical wiring.

### Related Background Art

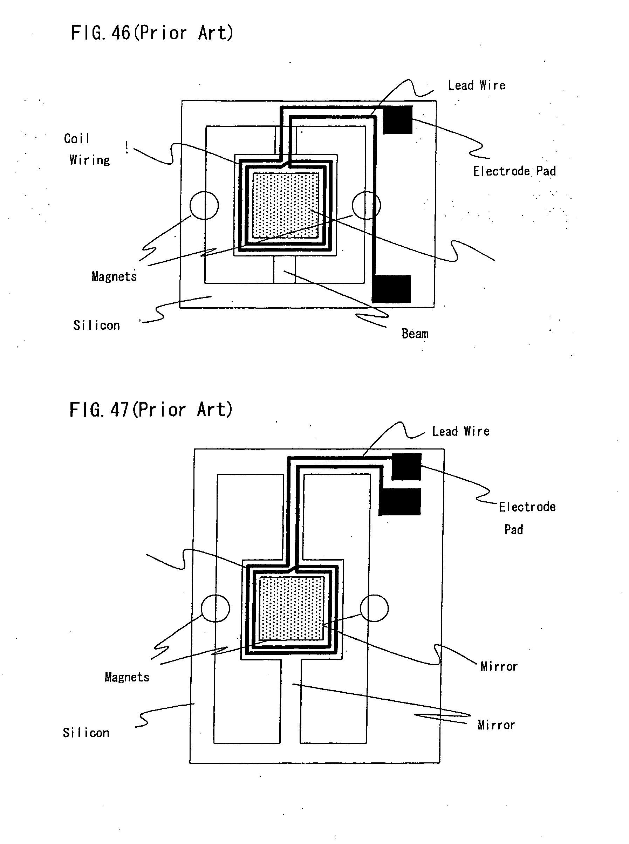

Various types of small-sized optical deflecting elements produced by MEMS (Micro Electro Mechanical Systems) processing technology have been proposed, produced their prototypes and practically employed in actual systems, since optical deflecting systems can be downsized and produced at lower costs. Various types of the optical deflecting elements which are actuated by electrostatic method, electromagnetic method, other method or the like, are proposed. For example, various types of the optical deflecting elements actuated by principle of galvanometer (a movable coil actuated by electromagnetic force) are proposed (so that the deflecting elements also are called "galvano mirror") and manufactured by the MEMS processing technology based on the semiconductor manufacturing technology (see reference 1). These optical deflecting elements employ, for example, beams constituted by a composite beam structure formed out of single crystal silicon and metallic wires on the crystal as shown in FIG.46 (see reference 2). Because the MEMS processing technology based on the semiconductor manufacturing technology is excellent in processing silicon with high precision. And since silicon is an elastic material, it is suitable material for the beam structure of the optical deflecting element.

Recently, optical deflecting elements actuated at low frequencies less than 100Hz and in wide deflecting angles, for example, more than 30°have been required at lower costs However, various technical problems arise in realizing such optical deflecting elements by utilizing only the composite beam structure consisting of single crystal silicon. Hereinafter these problems are explained as referring to FIGs.47 to 53.

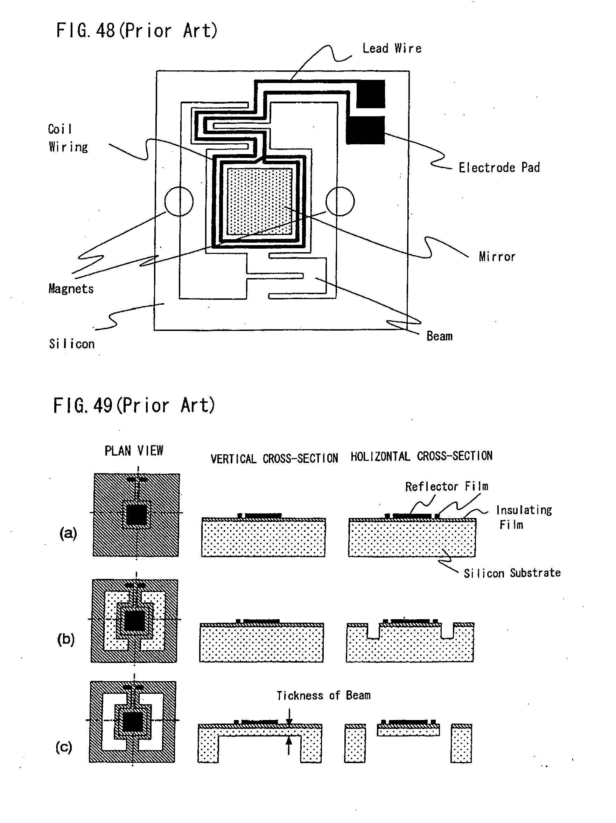

FIGs.47 and 48 are plan views of optical deflecting elements employing the beams made of single crystal silicon actuating at low frequencies, and these views are for explaining how difficult to constitute downsized optical deflecting elements. In order to actuate the optical deflecting element at a frequency less than 100Hz, it is necessary to design a long, fine and thin beam, because single crystal silicon has a large Young's modulus of ca. 130GPa. For example, an optical deflecting element capable of actuating at a low frequency can be realized by employing a beam with a length more than 3mm, a width less than 0.05mm and a thickness less than 0.01mm. However, as shown in FIG.47, a beam is formed as a longer one, so that there is a limit to downsize the optical deflecting element much smaller. In order to downsize the optical deflecting element further smaller, a folded structured beam might be possible as shown in FIG.48. However, although silicon is a hard material, it is also brittle material so that the long, finely and thinly formed beam is apt to be broken and there is a problem in its productivity. Even if such problematic beam is successfully produced, the beam apt to be broken when it is dropped, so that such beam is not be employable in portable products and the like which require sufficient impact resistance, which means applicable fields of such beam are limited.

FIG.49 is prepared for explaining difficulties to reduce manufacturing costs of the optical deflecting element by employing a beam made out of silicon. FIG.49 shows manufacturing steps of an electromagnetically actuating optical deflecting element which employs the beam made out of silicon by utilizing the MEMS technology as one of the examples. An insulating film is formed on a silicon substrate, when the silicon substrate is, for example, thermally oxidized. A metal wiring functioning as a coil and a reflector film for reflecting light are formed on the insulating film by photolithography technology and etching technology (see FIG.49(a)). After the metal wiring and the reflector film are formed, desired portions on the front surface of the silicon substrate are removed by the photolithography technology and the etching technology (see FIG.49(b)). The portions to be removed should be etched several tens of micrometer deeper from the reflector film. Further a portion corresponding to the reflector film and a beam on the rear surface of the silicon substrate is removed by the photolithography technology and the etching technology (see FIG.49(c)). An optical deflecting element is obtained by arranging magnets for generating magnetic fields at appropriate positions on the etched silicon substrate. However, a deflecting performance of the optical defecting manufactured in this manner fluctuates in a wide range, since a thickness of the beam is determined by the removed extent of the portion on the rear surface of the silicon substrate. For example, the thickness of the beam is set 50 micrometer on the silicon substrates having a thickness of 600 micrometer, an etching depth on the rear surface is determined 550 micrometer. However, actually, since usually an etching depth fluctuates in a range of 5%, the etching depth on the rear surface fluctuates around 27.5 micrometer. Consequently, the thickness of the beam fluctuates around 27.5 micrometer, which lowers a usable rate of the optical deflecting element so that production costs are increased.

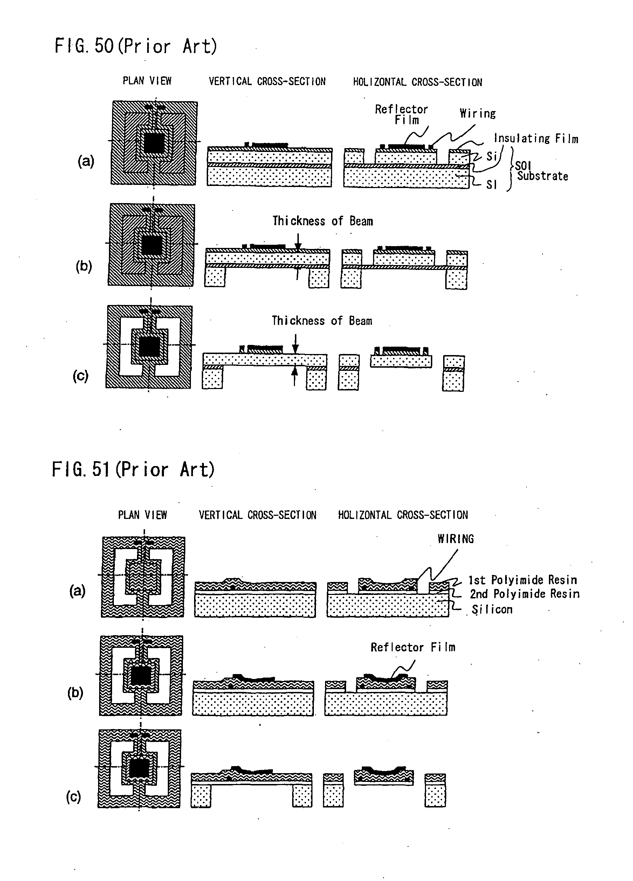

In order to solve the above-mentioned fluctuation, sometimes SOI (Silicon On Insulator) substrate as shown in FIG.50 is employed. FIG.50 shows manufacturing steps of an electromagnetically actuating optical deflecting element by utilizing the SOI substrate. After forming an insulating film, metal wiring and reflector film on the SOI substrate (i.e. upper silicon substrate) desired portions of the silicon are removed down to the insulating film of the lower silicon substrate (see FIG.50(a)) by employing photolithography technology and etching technology. Then, desired portions of the rear surface of the lower silicon substrate are removed up to the insulating film of the lower silicon substrate (see FIG.50(b)) by employing photolithography technology and etching technology. Finally exposed portions of the insulating films on the upper and lower silicon substrates are removed (see FIG.50(c)) by hydrofluoric acid solution or the like, so that the finished optical deflecting element is obtained. In this manufacturing method, a beam thickness of the finished optical deflecting element is determined by a thickness of the upper silicon substrate, so that the beam thickness which fluctuates within 1 micrometer can be realized. However, since the SOI substrate is expensive, for example around 10 times expensive than the ordinary silicon substrate, there is a limit to reduce manufacturing costs of the optical deflecting element.

As explained above, it is practically difficult to realize an optical deflecting element being able to actuate at lower frequencies at low cost.

As one of the methods to realize the optical deflecting element being able to actuate at lower frequencies, a method to utilize polyimide resin as a material for the beam has been proposed (reference 3). Since the polyimide resin has a lower Young's modulus of several GPa and since polyimide resin is a soft material, an optical deflecting element being able to actuate at lower frequencies is expected. Further, since the polyimide resin is not so brittle as the silicon and a manufacturing process which utilize the MESM technology can be applied to the polyimide resin, an optical deflecting element with a higher usable rate at low cost is expected. As an example, FIG.51 shows manufacturing steps of an electromagnetically actuating optical deflecting element by utilizing the polyimide resin as a material for a beam. For example, uncured photosensitive polyimide resin solution is applied on a silicon substrate and a first patterned polyimide resin film is formed by applying the photolithography technology to the uncured photosensitive polyimide resin. Metal wiring used as a coil is formed on the first patterned polyimide resin film. Then, uncured photosensitive polyimide resin solution is applied on the first patterned polyimide resin film and a second patterned polyimide resin film is formed in the same way as the first patterned polyimide resin film (see FIG.51(a)). A reflector film for reflecting light is formed on the second patterned polyimide resin film (see FIG.51(b)). Finally, portions of the rear surface of the silicon substrate corresponding to the beam and the reflector film are removed by employing photolithography technology and etching technology, so that the finished optical deflecting element is obtained. Since in the present method, soft polyimide resin can be used as a material for the beam by employing the MESM technology, an optical deflecting element being able to actuate at lower frequencies can be realized at low cost.

However, unlike a mirror polished surface of the silicon substrate, waviness is formed on the surface of the polyimide resin film due to an uneven thickness of the polyimide resin film. As a result, the reflector film formed on the polyimide resin film also has such waviness, which deteriorate optical aberration on the reflector film, so that the reflector film is not suitable for the optical deflecting element.

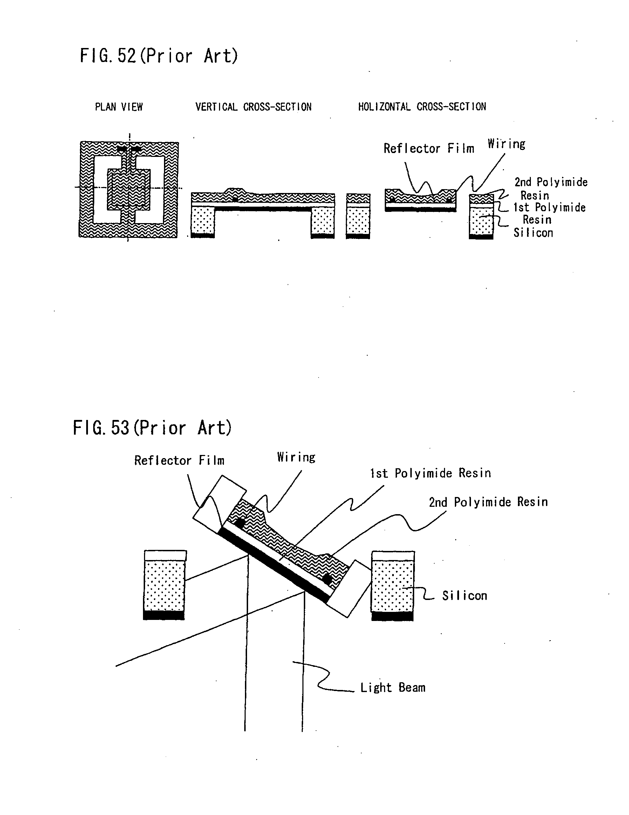

In order to eliminate the above-mentioned waviness, as shown in FIG.52, a method to form a reflector film deposited with metal such as gold on the rear surface of the first polyimide resin film is possible. The rear surface is much smoother, since it is contacted a smooth surface of the silicon substrate. However, light path of the optical deflecting element is partially blocked by the inner walls of the silicon substrate, when the optical deflecting element is deflected at a wider angle as shown in FIG.53, so that the optical deflecting element being able to actuate in a wider deflecting angle cannot be realized. If a distance between the reflector film and the side walls of silicon substrate is increased, the problem of partially blockage of the light path is solved. However, the size of the optical deflecting element must be increased. Alternatively, the above mentioned problem can be solved by reducing the thickness of the silicon substrate. In order to handle the silicon substrate automatically, there is a limit in the thickness of the silicon substrate. If the thickness is reduced to a certain extent, the silicon substrate cannot be handled by a standard MEMS manufacturing system, which will raise the production cost of the optical deflecting element.

A method for realizing an optical deflecting element being able to actuate at lower frequencies at low cost and for solving the problem of the waviness is proposed (reference 4). In the method, a polyimide sheet component, which is applicable to a beam, is formed out of polyimide resin sheet by utilizing flexible substrate manufacturing method. A reflector formed out of a silicon substrate by utilizing semiconductor manufacturing technology, is adhered to the polyimide sheet component. This method is applicable for forming the beam out of polyimide resin with a relatively lower Young's modulus and this method is hopeful to provide an optical deflecting element being able to actuate at lower frequencies at low cost.
Reference 1: Japanese laid open patent No. 2002-228951
Reference 2: Japanese laid open patent No. 7-175005
Reference 3: Japanese laid open patent No. 11-242180
Reference 4: Japanese laid open patent No. 2005-99063

### Disclosure of the Invention

### Problems to be Solved by the Invention

In the optical deflecting element disclosed by reference 4, since mechanical properties of the beam are influenced, in other words a performance of the optical deflecting element is varied, when metal wiring is formed on the beam made of the polyimide sheet, the metal wiring is led from the coil formed on the polyimide and connected to external terminals. However, it is difficult to form the wiring on the unstable polyimide sheet used as a movable component, and it is probable that the polyimide sheet is broken if the wiring is formed on the polyimide sheet. Further, since Young's modulus of polyimide resin cannot be controlled in a wide range, there is a big problem that a freedom in designing the optical deflecting element is restricted.

The present invention is carried out in view of the above-mentioned problems in order to provide an electromagnetically actuating optical deflecting element drivable at lower frequencies and at wider deflecting angles, and further to provide a downsized optical deflecting element at low cost with less operating fluctuations which might be caused by the wiring.

### Means to Solve the Problem

The above-mentioned problems of the present invention are solved by any one of the electromagnetically actuating optical deflecting elements constituted in the following manners (1) to (14).
(1) An optical deflecting element comprising: a base component having magnets therein; a soft resin component comprising a fixed part adhered to the base component and a movable part having a coil therein supported by said fixed part via a pair of beams; and a reflector plate adhered on to the movable part, wherein: the soft resin component consists of a first insulating resin part and second conductive resin part for electrical wiring.
(2) The optical deflecting element according (1), wherein: the first insulating resin part and the second conductive resin part are formed out of silicone rubber.
(3) The optical deflecting element according to (1) or (2), wherein: the movable part has a coil integrally formed out of the second conductive resin part therein.
(4) The optical deflecting element according to (1) or (2), wherein: the movable part has a coil formed out of a conductive material thereon and the coil is electrically connected to the second conductive resin part.
(5) The optical deflecting element according to (1) or (2), wherein: the soft resin component is formed by punching technology.
(6) The optical deflecting element according to (1) or (2), wherein: the soft resin component is formed by molding technology.
(7) The optical deflecting element according to (1) or (2), wherein: the soft resin component is constituted by utilizing a plurality of molds such that the second conductive resin part is continuously molded on the first insulating resin part after the first insulating resin part is molded.
(8) The optical deflecting element according to any one of (1) to (7), wherein: the reflector plate is formed out of a silicon substrate or a glass substrate.
(9) The optical deflecting element according to (8), wherein: holes or through holes are formed on the reflector plate; protruded portions are formed on the soft resin component; and the reflector plate is appropriately positioned by mating the holes or the through holes formed on the reflector plate with the protrusions formed on the soft component.
(10) An optical deflecting element comprising: a base component; a soft resin component comprising a fixed part adhered to the base component and a movable part supported by the fixed part via a pair of beams; a magnetic component adhered on to the movable part; a reflector plate adhered on to the magnetic component or the movable part; and a substrate having a coil therein adhered to the base component.
(11) The optical deflecting element according to (10), wherein: the soft resin component is formed out of silicone rubber.
(12) The optical deflecting element according to (10), wherein: the soft resin component is formed by punching technology.
(13) The optical deflecting element according to (10), wherein: the soft resin component is formed by molding technology.
(14) The optical deflecting element according to (10), wherein: the reflector plate is formed out of a silicon substrate or a glass substrate.

### Effects Attained by the Invention

A downsized optical deflecting element drivable at lower frequencies with a wide range of deflecting angle can be provided by the present invention, since soft and non-brittle materials such as silicone rubber and the like are employed for the beam which supports the reflector.

And since conductive resin components are used for the wiring or the so-called movable iron core typed electromagnetic drive is employed, the optical deflecting element with less operational fluctuations caused by the wiring can be provided.

Further the optical deflecting element can be provided at low cost by utilizing molding technology and punching technology.

### Brief Descriptions of the Drawings

FIG. 1 is a plan view illustrating a constitution of embodiment 1.
FIG.2 is a cross-sectional view along line A-A in FIG.1.
FIG.3 is a cross-sectional view along line B-B in FIG.1.
FIG.4 is a plan view and a cross-sectional view along line C-C in the plan view illustrating structures of a reflector plate of embodiment 1.
FIG.5 is a plan view and a cross-sectional view along line D-D in the plan view illustrating structures of another reflector plate of embodiment 1.
FIG.6 is a plan view and a cross-sectional view along line E-E in the plan view illustrating structures of soft resin components of embodiment 1.
FIG.7 is a plan view and a cross-sectional view along line F-F in the plan view illustrating structures of a base component of embodiment 1.
FIG.8 is a plan view and a cross-sectional view along line G-G in the plan view illustrating structures of a first insulating resin component of embodiment 1.
FIG.9 is a plan view and a cross-sectional view along line H-H in the plan view illustrating structures of a second insulating resin component of embodiment 1.
FIG.10 is cross-sectional views illustrating continuous manufacturing steps of the resin components of embodiment 1.
FIG.11 is a plan view illustrating a constitution of embodiment 2.
FIG.12 is a cross-sectional view along line I-I in FIG.11.
FIG. 13 is cross-sectional views illustrating continuous manufacturing steps of resin components of embodiment 2.
FIG.14 is a plan view and a cross-sectional view along line J-J in the plan view illustrating structures of conductive resin components of embodiment 2.
FIG.15 is a plan view illustrating a constitution of embodiment 3.
FIG.16 is a cross-sectional view along line K-K in FIG.15.
FIG.17 is a cross-sectional view along line L-L in FIG.15.
FIG.18 is a plan view and a cross-sectional view illustrating structures of a reflector plate of embodiment 3.
FIG. 19 is a plan view and a cross-sectional view illustrating structures of soft resin components of embodiment 3.
FIG.20 is a plan view and a cross-sectional view illustrating structures of a base component of embodiment 3.
FIG.21 is a plan view illustrating a constitution of embodiment 4.
FIG.22 is a cross-sectional view along line P-P in FIG.21.
FIG.23 is a cross-sectional view along line Q-Q in FIG.21.
FIG.24 is a plan view and a cross-sectional view illustrating structures of a reflector plate of embodiment 4.
FIG.25 is a plan view and a cross-sectional view illustrating structures of soft resin components of embodiment 4.
FIG.26 is a plan view and a cross-sectional view illustrating structures of a base component of embodiment 4.
FIG.27 is a plan view and a cross-sectional view illustrating structures of another reflector plate of embodiment 4.
FIG.28 is a plan view illustrating a constitution of embodiment 5.
FIG.29 is a cross-sectional view along line V-V in FIG.28.
FIG.30 is a cross-sectional view along line W-W in FIG.28.
FIG.31 is a plan view and a cross-sectional view illustrating structures of a reflector plate of embodiment 5.
FIG.32 is a plan view and a cross-sectional view illustrating structures of soft resin components of embodiment 5.
FIG.33 is a plan view and a cross-sectional view illustrating structures of a base component of embodiment 5.
FIG.34 is a plan view and a cross-sectional view illustrating structures of another reflector plate of embodiment 5.
FIG.35 is a partial plan view and a partial cross-sectional view illustrating an example of an electrically connected part of embodiment 5.
FIG.36 is a partial plan view and a partial cross-sectional view illustrating another example of an electrically connected part of embodiment 5.
FIG.37 is a partial plan view and a partial cross-sectional view illustrating further example of an electrically connected part of embodiment 5.
FIG.38 is a plan view illustrating a constitution of embodiment 6.
FIG.39 is a cross-sectional view along line AE-AE in FIG.38.
FIG.40 is a cross-sectional view along line AF-AF in FIG.38.
FIG.41 is a plan view and a cross-sectional view illustrating structures of a reflector plate of embodiment 6.
FIG.42 is a plan view and a cross-sectional view illustrating structures of a thin magnetic component of embodiment 6.
FIG.43 is a plan view and a cross-sectional view illustrating structures of a soft resin component of embodiment 6.
FIG.44 is a plan view and a cross-sectional view illustrating structures of a base component of embodiment 6.
FIG.45 is a plan view and a cross-sectional view illustrating structures of a coil component of embodiment 6.
FIG.46 is a plan view illustrating a constitution of an example of conventional optical deflecting elements.
FIG.47 is a plan view illustrating a constitution of another example of conventional optical deflecting elements.
FIG.48 is a plan view illustrating a constitution of further example of conventional optical deflecting elements.
FIG.49 is plan views and cross-sectional views illustrating manufacturing steps of a conventional optical deflecting element.
FIG.50 is plan views and cross-sectional views illustrating manufacturing steps of a conventional optical deflecting element by employing the SOI substrate.
FIG.51 is plan views and cross-sectional views illustrating manufacturing steps of a conventional optical deflecting element in which beams are made of polyimide resin.
FIG.52 is plan views and cross-sectional views illustrating manufacturing steps of another conventional optical deflecting element in which beams are made of polyimide resin.
FIG.53 is plan views and cross-sectional views illustrating manufacturing steps of other conventional optical deflecting element in which beams are made of polyimide resin.

### Preferred Embodiments by the Present Invention

Hereinafter, the preferred embodiments by the present invention are explained in details as referring to drawings.

### Embodiment 1

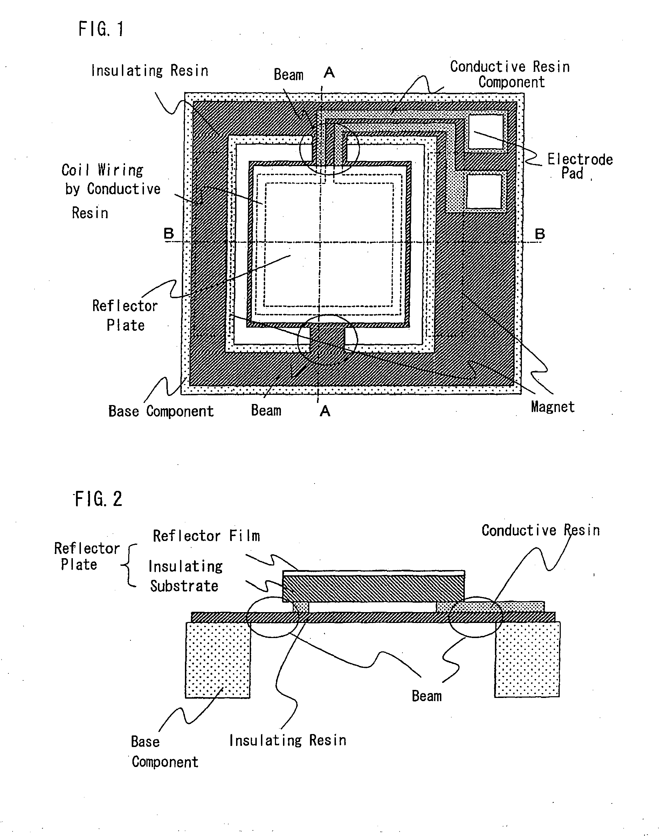

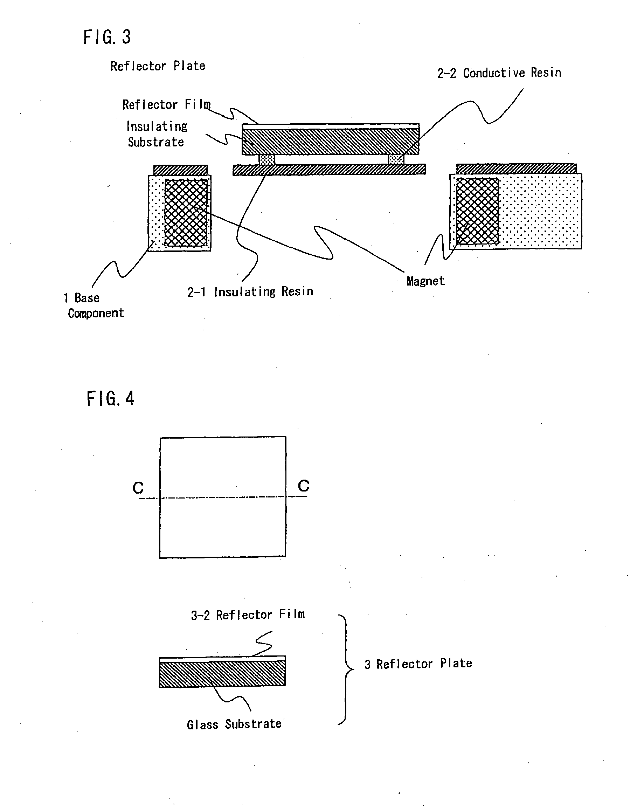

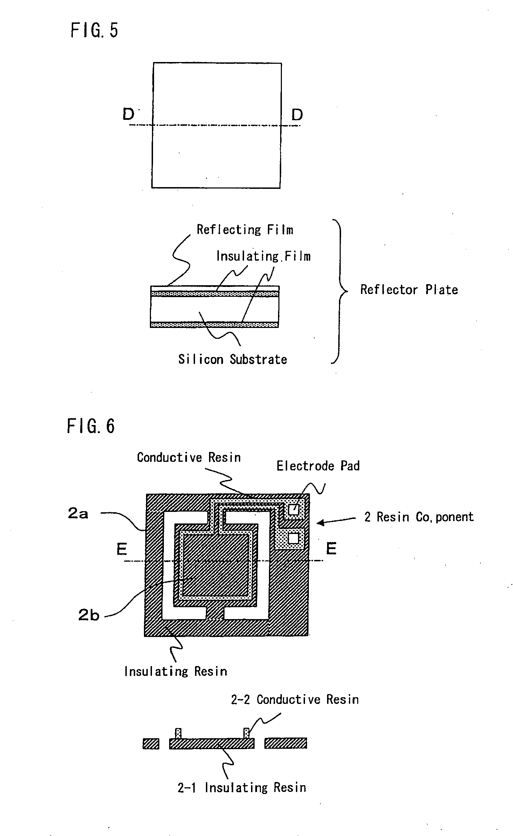

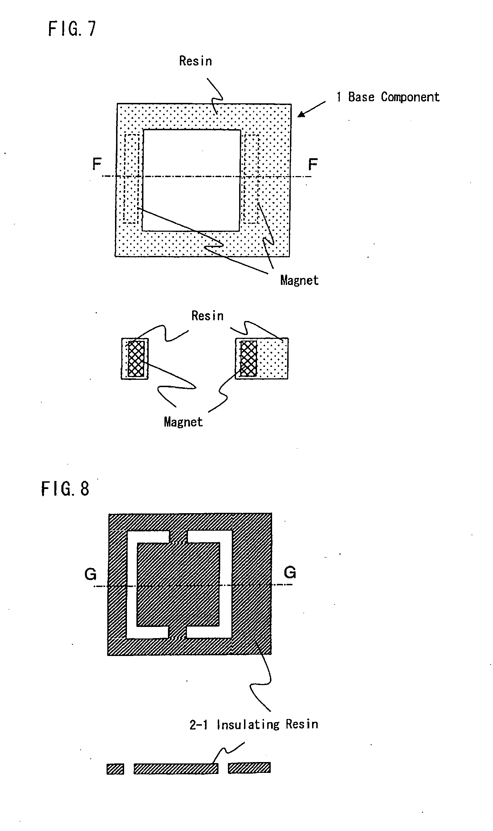

FIGs.1, 2, 3, 4, 5 and 6 are drawings illustrating the constitution of "the electromagnetically actuating optical deflecting element" of the present embodiment. FIG.1 is the plan view of the electromagnetically actuating optical deflecting element. FIGs.2 and 3 are the cross-sectional views along line A-A and along line B-B in FIG.1. FIGs.4 and 5 are the plan views and the cross-sectional views along line C-C and line D-D in the respective plan view illustrating structures of reflector plates. FIG.6 is the plan view and the cross-sectional view along line E-E in the plan view illustrating structures of soft resin components including beams. FIG.7 is the plan view and the cross-sectional view along line F-F in the plan view illustrating structures of the base component in which magnets are embedded.

Since "flexible resin" referred in embodiments is usually called "soft resin", a term "soft resin" is used in claims of the present invention. A peripheral part molded out of flexible resin is a fixed part 2a. A movable part 2b having a coil therein is supported by the fixed part 2a via beams (see FIG.6).

A resin component 2 shown in FIG.6 is adhered on to a base component 1 shown in FIG.7. Then a reflector plate 3 shown in FIG.4 is adhered on to the assembled resin component 2. In this manner the optical deflecting element by embodiment 1 shown in FIGs.1 to 3 is constituted.

The reflector plate 3 shown in FIG.4 is formed in the following manner. A reflector film 3-2 is formed on a glass substrate 3-1 with a thickness of 200 micrometer by depositing gold with a thickness of 1 micrometer. The reflector plate having a desired size, for example a square of side 2mm, is cut from the gold deposited glass substrate by dicing technology. In the present embodiment, a glass plate is employed as the substrate, but a silicon substrate can be employed instead. In this case, it is desirable to thermally oxidize the front and rear surfaces of the silicon substrate so as to form insulating films on the surfaces as shown in FIG.5.

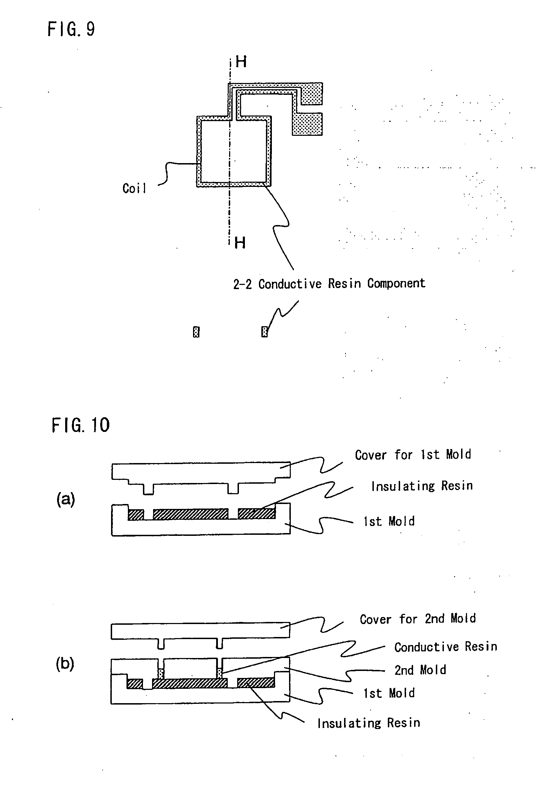

A flexible resin component 2 is formed by molding silicone rubber in a mold. As a first step an insulating resin component 2-1 shown in FIG.8 is formed out of silicone rubber by utilizing molding technology, and a conductive resin component 2-2 shown in FIG.9 is formed out of conductive silicone rubber by utilizing molding technology. Then the conductive resin component 2-2 is adhered on to the insulating resin component 2-1, so that the flexible component 2 shown in FIG.6 is obtained. Gold or the like is a suitable material for electrode pads shown in FIG.6 and it can be deposited on the conductive resin component 2-2 by using a metal mask.

In the present embodiment, the molding technology is employed for forming the respective resin components, but the resin components can be formed by utilizing punching technology. In the present embodiment, the flexible resin component 2 is obtained by adhering the conductive resin component 2-2 on to the insulating resin component 2-1. However, as shown in FIG. 10, the flexible resin component 2 can be obtained by utilizing a plurality of molds such that the conductive resin component 2-2 is successively molded on the insulting resin component 2-1 (FIG.10(b)) after the latter component is molded (FIG.10(a)).

As already well known, since Young's modulus of the silicone rubber can be varied in a range from around 1kPa to around 10MPa by controlling sulfur content in the silicone rubber, a resonance frequency of the component can be changed by controlling the sulfur content without modifying a shape of the component. Consequently, a plurality of molds and photo masks are not required for developing the component, so that production costs and a time for developing the component can be considerably reduced.

As explained above, since the soft and non-brittle silicone rubber is employed as a material for a pair of beams which support the reflector plate, the present embodiment can provide the downsized optical deflecting element which can be actuated at lower frequencies with a wide deflecting angle.

Since the conductive silicone rubber is employed as electrical wiring, the optical deflecting element with a stable operating characteristic can be provided.

Further, since molding technology and punching technology can be utilized for processing silicone rubber, the optical deflecting element can be provided at low cost.

### Embodiment 2

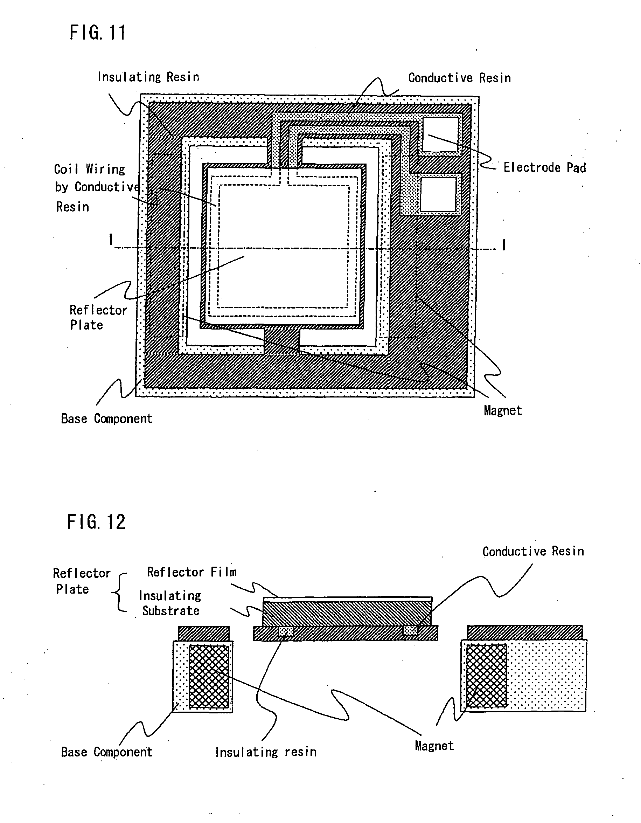

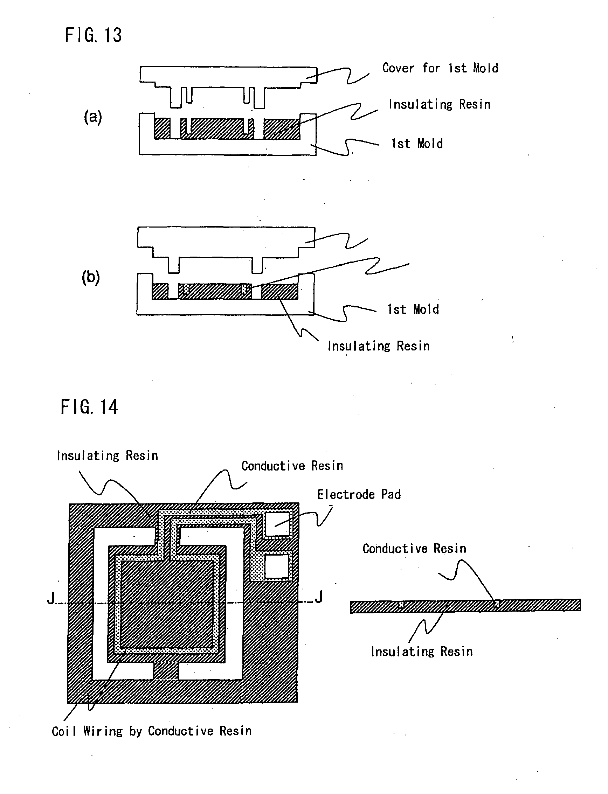

FIGs.11 and 12 are drawings illustrating the constitution of "the electromagnetically actuating optical deflecting element" of the present embodiment. As shown in FIG.13, a first mold and a second mold are employed. As a first step an insulating resin component is molded in the first mold (FIG.13(a)). Then a conductive resin component is molded in grooves formed on the molded insulating resin component such that the conductive resin is molded up to the upper surface of the molded insulating resin component (FIG.13(b)). Electrode pads are formed on the conductive resin component in the same manner as in embodiment 1, so that an assembled resin component is obtained as shown in FIG.14.

As explained above, since the conductive resin component is molded in the grooves formed on the insulating resin component up to the upper surface of the insulating resin component, in other words, the assembled resin component has a flat upper surface, a reflector plate adhered on to the flat upper surface can be further stabilized.

### Embodiment 3

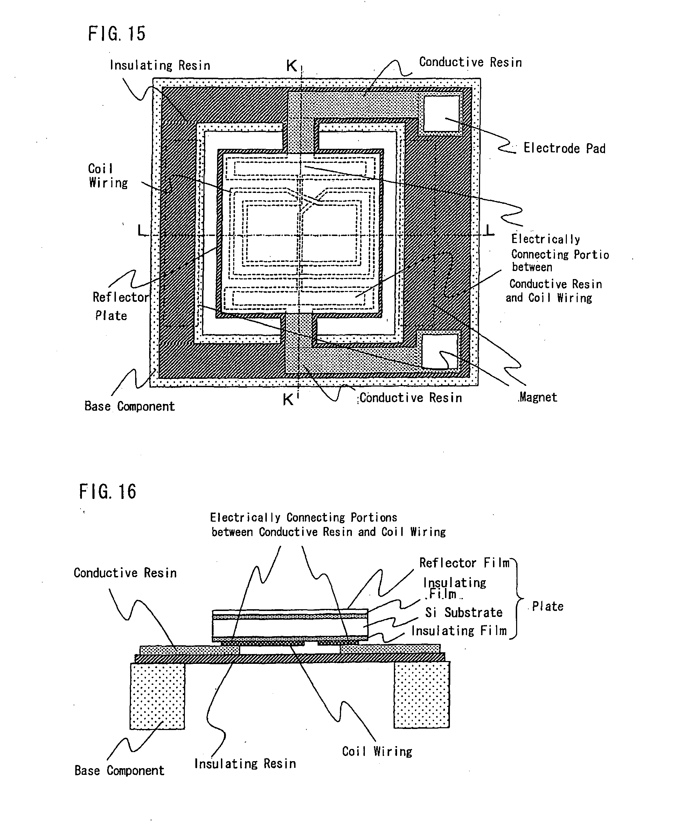

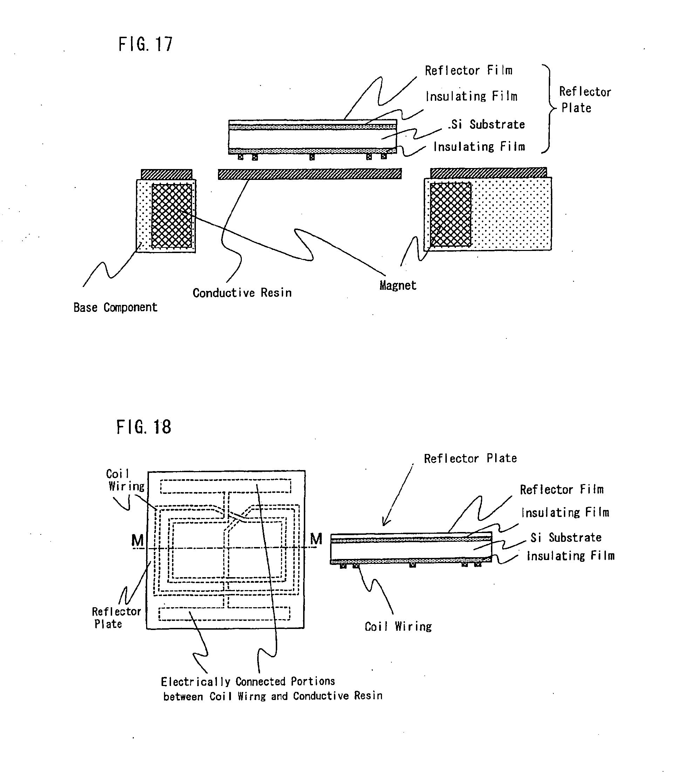

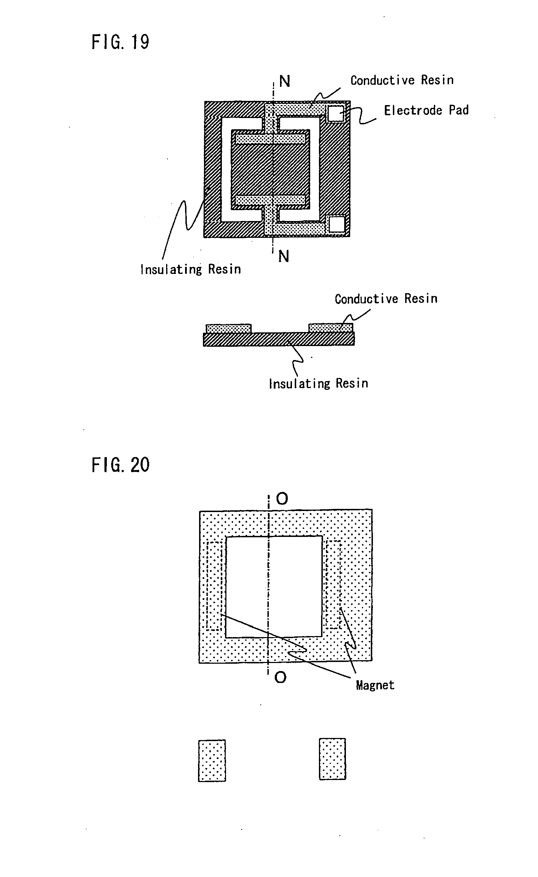

FIGs.15, 16, 17, 18, 19 and 20 are drawings illustrating the constitution of "the electromagnetically actuating optical deflecting element" of the present embodiment. FIG.15 is the plan view of the electromagnetically actuating optical deflecting element. FIGs.16 and 17 are the cross-sectional views along line K-K and along line L-L in FIG.15. FIG. 18 is the plan view and the cross-sectional view along line M-M in the plan view illustrating the structure of reflector plate. FIG.19 is the plan view and the cross-sectional view along line N-N in the plan view illustrating the structure of the assembled resin component by the present embodiment. FIG.20 is the plan view and the cross-sectional view along line O-O illustrating the structure of the base component made of resin in which magnets are embedded.

The resin component shown in FIG.19 is adhered on to the base component shown in FIG.20. Then the reflector plate shown in FIG.18 is adhered on to the assembled resin component. In this manner the optical deflecting element by the present embodiment shown in FIGs.15 to 17 is constituted.

The reflector plate shown in FIG.18 is obtained in the following manner. A silicon substrate with a thickness of 200 micrometer is thermally oxidized so as to form silicon oxide as insulating films with a thickness of 1 micrometer on both surfaces of the silicon substrate. Gold wiring is formed on the rear insulating film by utilizing semiconductor manufacturing technology and gold film with a thickness of 1 micrometer as reflector film is formed on the front insulating film by deposition technology. Then the silicon substrate is cut out into a desired size, for example, a square of side 2mm by utilizing dicing technology, so that the reflector plate is obtained. The gold wiring on the rear insulating film consists of two parts: one is coil wiring for actuating the reflector plate electromagnetically and the other is lead wiring so as to be connected to conductive resin components, which will be explained later. In the present embodiment, the silicon substrate is employed for the substrate of the reflector plate, but a glass substrate can be employed instead.

The soft resin component shown in FIG.19 can be formed in the same manner as in embodiment 1, namely, silicone rubber is molded by molding technology. The soft resin component has conductive parts which are electrically connected to the above-mentioned gold wiring on the rear insulating film of the reflector plate. It is desirable to design the conductive parts larger ones so as to reduce electrical resistances of the conductive parts.

As explained above, since multilayered gold wiring can be easily attained by utilizing semiconductor manufacturing technology and since the turning number of the coil wiring can be increased easily, actuating performance of the electromagnetically actuating optical deflecting element can be improved.

### Embodiment 4

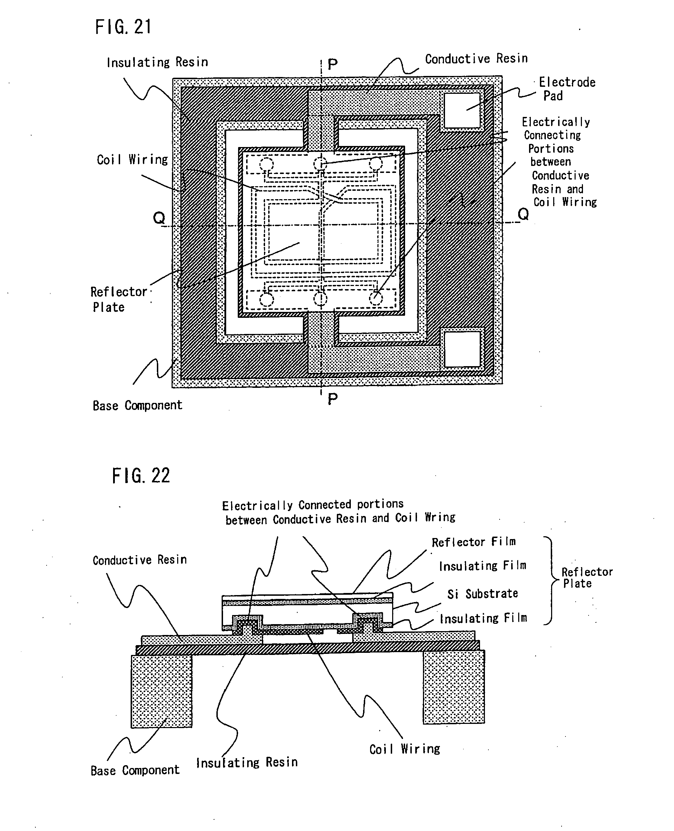

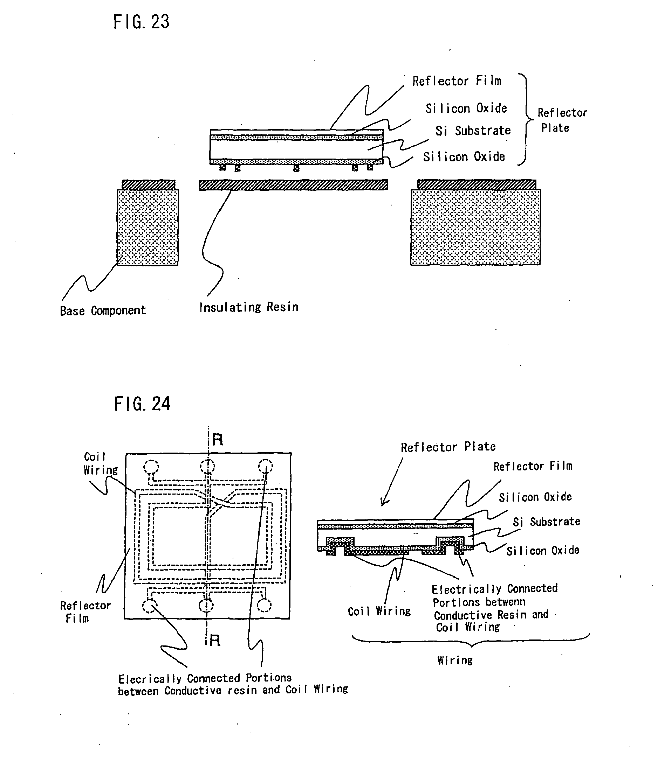

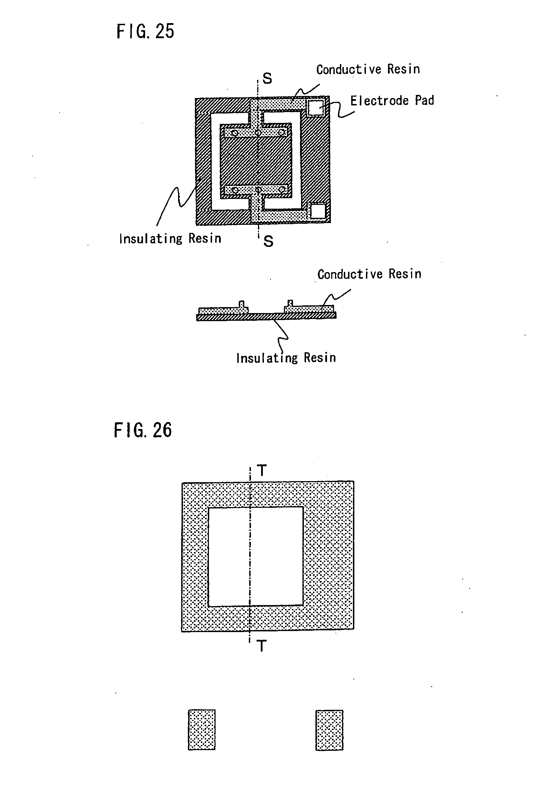

FIGs.21, 22, 23, 24, 25, 26 and 27 are drawings illustrating the constitution of "the electromagnetically actuating optical deflecting element" of the present embodiment. FIG.21 is the plan view of the electromagnetically actuating optical deflecting element. FIG.22 and FIG.23 are cross-sectional views along line P-P and line Q-Q in FIG.21. FIG.24 is the plan view and the cross-sectional view along line R-R in the plan view illustrating the structure of reflector plate by the present embodiment. FIG.25 is the plan view and the cross-sectional view along line S-S in the plan view illustrating the structure of the assembled resin component. FIG.26 is the plan view and the cross-sectional view along line T-T illustrating the structure of the base component made of bonded magnet.

The resin component shown in FIG.25 is adhered on to the base component shown in FIG.26. Then the reflector plate shown in FIG.24 is adhered on to the assembled resin component. In this manner the optical deflecting element by the present embodiment shown in FIGs.21 to 23 is constituted.

The reflector plate shown in FIG.24 is obtained in the following manner. At first holes for mating with the resin component which has conductive parts, are formed on the rear surface of the silicon substrate with a thickness of 200 micrometer by utilizing semiconductor technology. Then the silicon substrate is thermally oxidized so as to form silicon oxide as insulating films with a thickness of 1 micrometer on both surfaces of the silicon substrate. Gold wiring is formed on the rear insulating film by utilizing semiconductor manufacturing technology and gold film with a thickness of 1 micrometer as reflector film is formed on the front insulating film by deposition technology. Then the silicon substrate is cut out into a desired size, for example, a square of side 2mm by utilizing dicing technology, so that the reflector plate is obtained.

In the present embodiment, the silicon substrate is employed for the substrate of the reflector plate, but a glass substrate can be employed instead. When the glass substrate is employed, it is desirable to form holes on the rear surface of the glass substrate by sand blasting technology.

The soft resin component shown in FIG.25 can be formed in the same manner as in embodiment 1, namely, silicone rubber is molded by molding technology. The soft resin component has conductive parts which are electrically connected to the above-mentioned gold wiring on the rear insulating film of the reflector plate. And protruded portions are formed on the conductive parts so as to be mated with the holes formed on the rear surface of the reflector plate.

As explained above, since the holes formed on the rear surface of the reflector plate are mated with the protruded portions, the reflector plate and the resin component can be assembled with good precision. And since effective contacted areas of the conductive parts are increased, electrical resistance is reduced. In the present embodiment, the holes formed on the rear surface of the reflector plate and the protruded portions of the conductive parts are designed electrically conductive, but these holes and protruded portions are not necessarily conductive. Electrical connections can be attained by connecting other portions.

### Embodiment 5

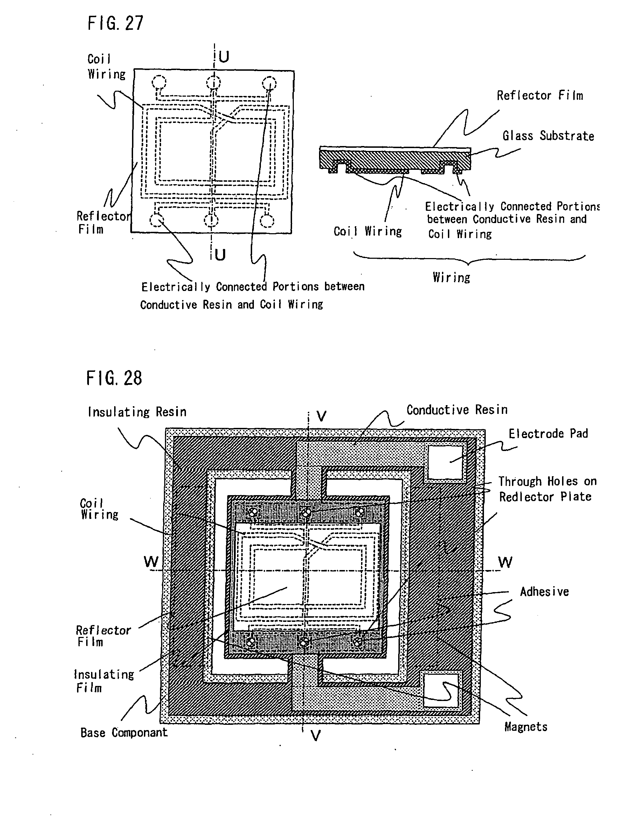

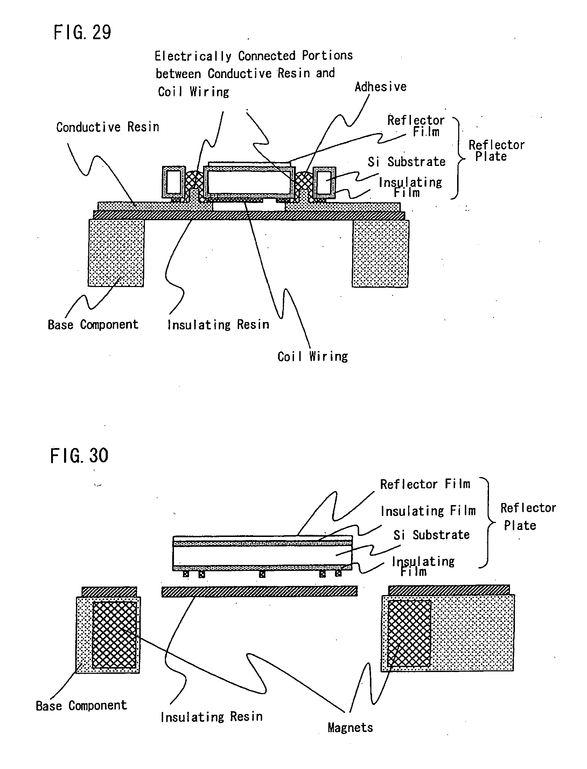

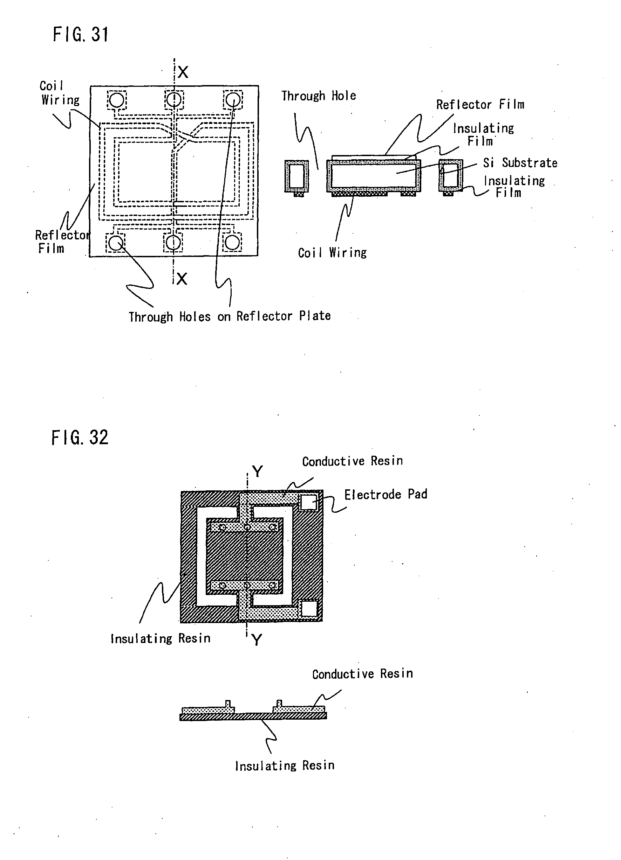

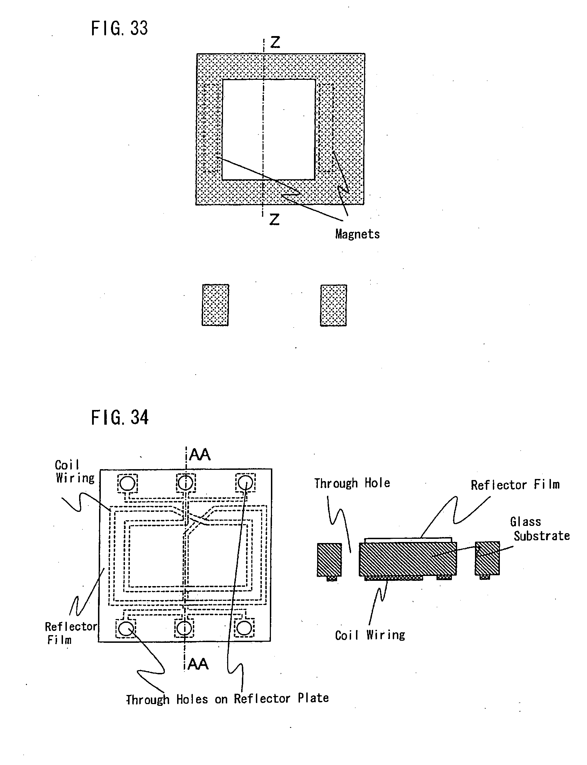

FIGs.28, 29, 30, 31, 32 and 33 are drawings illustrating the constitution of "the electromagnetically actuating optical deflecting element" of the present embodiment. FIG.28 is the plan view of the electromagnetically actuating optical deflecting element. FIG.29 and FIG.30 are cross-sectional views along line V-V and line W-W in FIG.28. FIG.31 is the plan view and the cross-sectional view along line X-X in the plan view illustrating the structure of reflector plate by the present embodiment. FIG.32 is the plan view and the cross-sectional view along line Y-Y in the plan view illustrating the structure of the assembled resin component. FIG.33 is the plan view and the cross-sectional view along line Z-Z illustrating the structure of the base component in which magnets are embedded.

The resin component shown in FIG.32 is adhered on to the base component shown in FIG.33. Then the reflector plate shown in FIG.31 is adhered on to the assembled resin component. In this manner the optical deflecting element by the present embodiment shown in FIGs.28 to 30 is constituted.

The reflector plate shown in FIG.31 is obtained in the following manner. Through holes for mating with the resin component which has conductive parts, are formed on the rear surface of the silicon substrate with a thickness of 200 micrometer by utilizing semiconductor technology. Then the silicon substrate is thermally oxidized so as to form silicon oxide as insulating films with a thickness of 1 micrometer on both surfaces of the silicon substrate. Gold wiring is formed on the rear insulating film by utilizing semiconductor manufacturing technology and gold film with a thickness of 1 micrometer as reflector film is deposited through a mask at a desired portion on the front insulating film by deposition technology. Then the silicon substrate is cut out into a desired size, for example, a square of side 2mm by utilizing dicing technology, so that the reflector plate is obtained. In the present embodiment, the silicon substrate is employed for the substrate of the reflector plate, but a glass substrate can be employed instead. When the glass substrate is employed, it is desirable to form through holes on the glass substrate by sand blasting technology.

The soft resin component shown in FIG.32 can be formed in the same manner as in embodiment 1, namely, silicone rubber is molded by molding technology. The soft resin component has conductive parts which are electrically connected to the above-mentioned gold wiring on the rear insulating film of the reflector plate. And protruded portions are formed on the conductive parts so as to be mated with the thorough holes formed on the reflector plate.

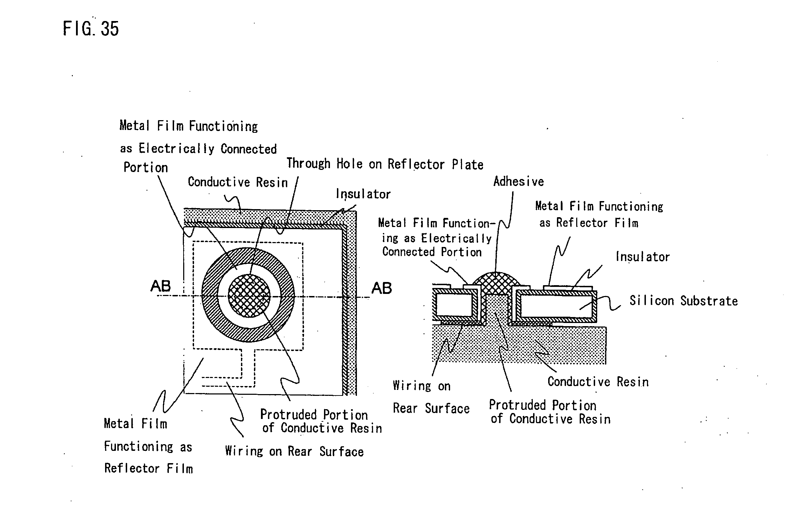

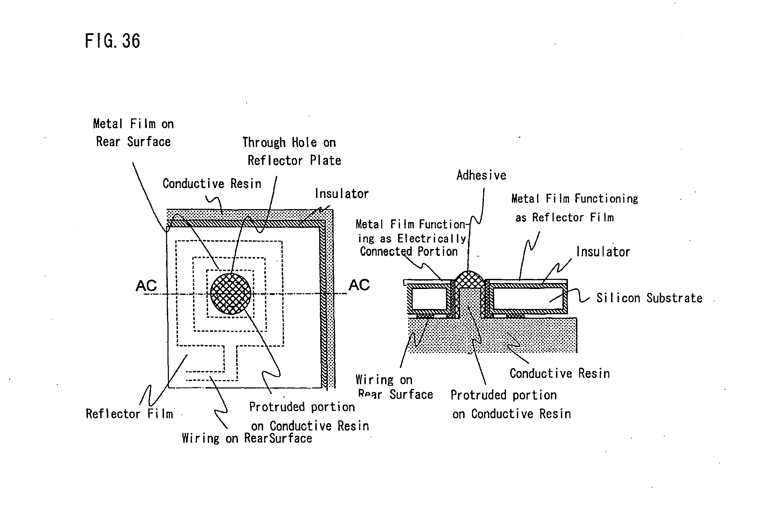

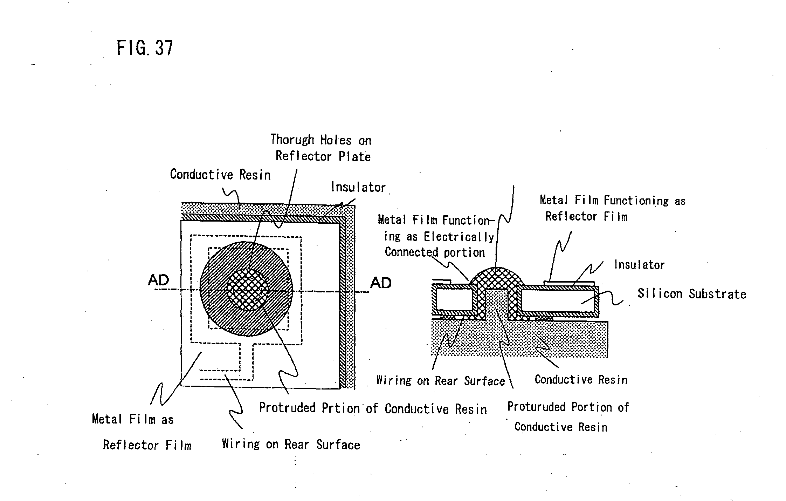

As explained above, since the through holes formed on the reflector plate are mated with the protruded portions, the reflector plate and the resin component can be assembled with good precision. And since the protruded portions of the resin component can be observed easily through the through hole on the reflector plate, the mating step can be carried out easily. Further since effective contacted areas of the conductive parts are increased, electrical resistance is reduced. In the present embodiment, the through holes formed on the reflector plate and the protruded portions of the conductive parts are designed electrically conductive, but these through holes and protruded portions are not necessarily conductive. Electrical connections can be attained by connecting other portions. In FIGs.35, 36 and 37, examples of electrical connections between the gold wiring formed on the rear surface of the reflector and conductive parts of the resin component are illustrated. FIG.35 is the partial plan view and the partial cross-sectional view along line AB-AB in the partial plan view. FIG.36 is the partial plan view and the partial cross-sectional view along line AC-AC in the partial plan view. FIG.37 is the partial plan view and the partial cross-sectional view along line AD-AD in the partial plan view.

### Embodiment 6

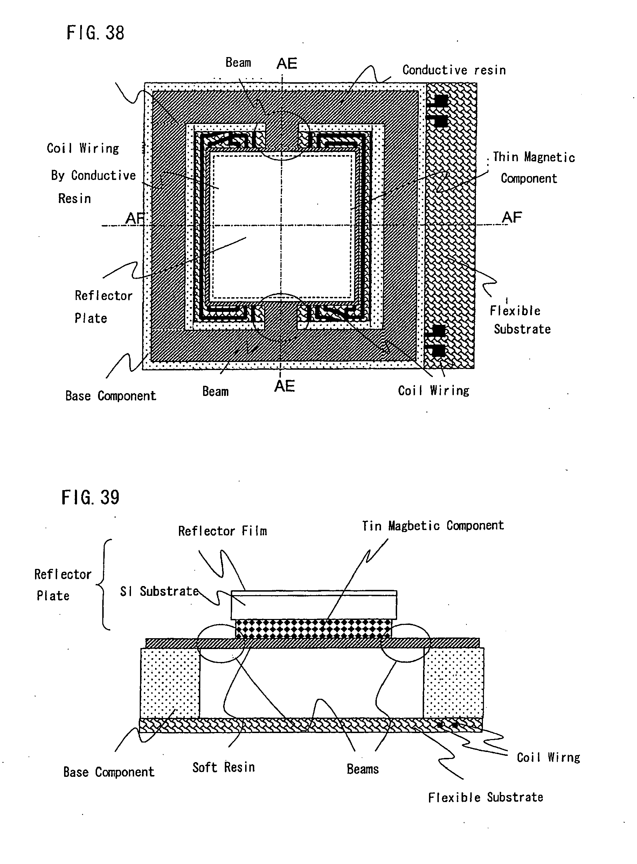

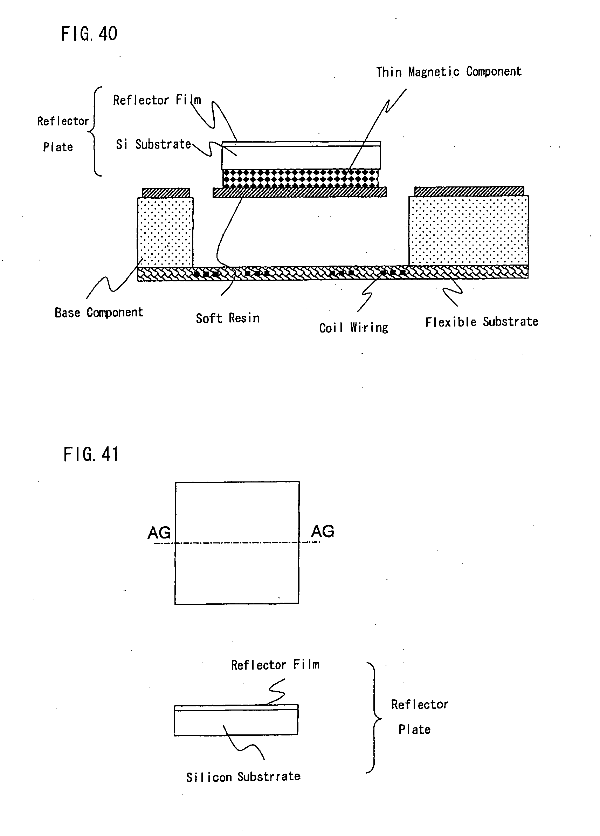

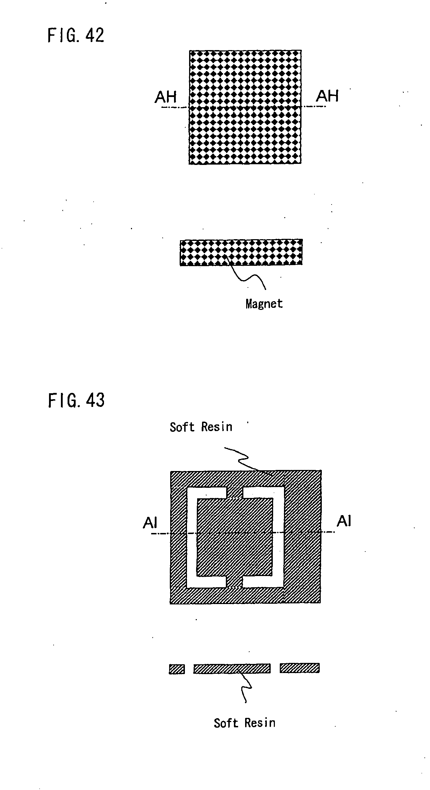

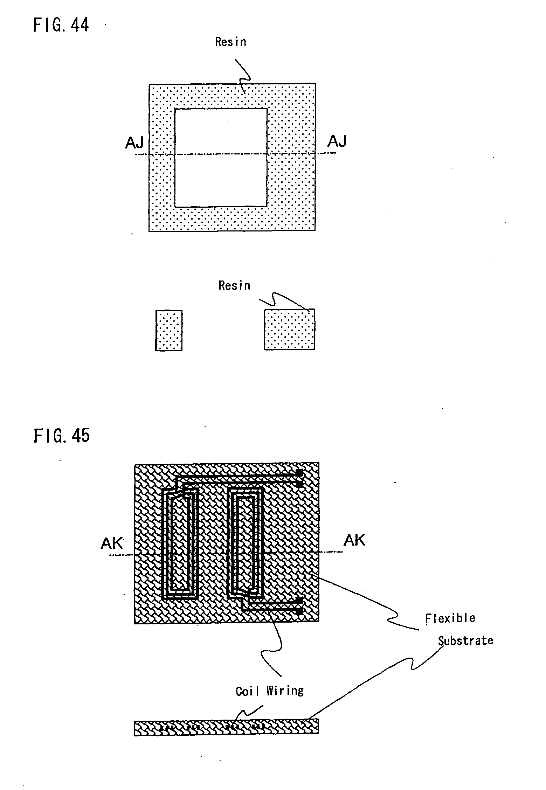

FIGs.38, 39, 40, 41, 42, 43, 45 and 46 are drawings illustrating the constitution of "the electromagnetically actuating optical deflecting element (movable iron core type)" of the present embodiment. FIG.38 is the plan view of the electromagnetically actuating optical deflecting element. FIG.39 and FIG.40 are cross-sectional views along line AE-AE and line AF-AF in FIG.38. FIG.41 is the plan view and the cross-sectional view along line AG-AG in the plan view illustrating the structure of reflector plate by the present embodiment. FIG.42 is the plan view and the cross-sectional view along line AH-AH in the plan view illustrating the structure of the thin magnetic component. FIG.43 is the plan view and the cross-sectional view along AI-AI illustrating the soft resin component. FIG.44 is the plan view and the cross-sectional view along line AJ-AJ illustrating the structure of the base component made of resin. FIG.45 is the plan view and the cross-sectional view along line AK-AK of the coil component for generating magnetic field.

The base component shown in FIG.44 is adhered on to the coil component shown in FIG.45. Then the resin component 43 is adhered on to the adhered base component. Further the thin magnetic component shown in FIG.42 is adhered on to the adhered resin component. Finally the reflector plate shown in FIG.41 is adhered on to the adhered thin magnetic component. In this manner the optical deflecting element by the present embodiment shown in FIGs.38 to 40 is constituted.

The reflector plate shown in FIG.41 is obtained in the following manner. Gold film with a thickness of 1 micrometer, uses as a reflector film, is formed on a front surface of a silicon substrate with a thickness of 200 micrometer by depositing gold. Then the silicon substrate is cut out into a desired size, for example, a square of side 2mm by utilizing dicing technology, so that the reflector plate is obtained. In the present embodiment, the silicon substrate is employed for the substrate of the reflector plate, but a glass substrate can be employed instead.

The soft resin component shown in FIG.43 and the base component shown in FIG.44 can be formed in the same manner as in embodiment 1, namely, silicone rubber is molded by molding technology.

The coil component, used for a means to generate magnetic filed, shown in FIG.45 can be easily made out of polyimide film by utilizing flexible circuit manufacturing technology.

As explained above, since the thin magnetic component is employed in a movable part of the present embodiment, which means it is not required to form electrical wiring on the reflector plate and soft resin component, steps to manufacture the optical deflecting element is simplified. And since the beams can be formed out of only one kind of silicone rubber, operating characteristics of the present embodiment more stabilized than an optical deflecting element which employs composite beams, are obtained, for example, by combining conductive silicone rubber and insulating silicone rubber.

## Claims

1. An optical deflecting element comprising:
a base component having magnets therein;
a soft resin component comprising a fixed part adhered to said base component and a movable part having a coil therein supported by said fixed part via a pair of beams; and
a reflector plate adhered on to said movable part, wherein:
said soft resin component consists of a first insulating resin part and second conductive resin part for electrical wiring.

2. The optical deflecting element according claim 1, wherein:
said first insulating resin part and said second conductive resin part are formed out of silicone rubber.

3. The optical deflecting element according to claim 1 or claim 2, wherein:
said movable part has a coil integrally formed out of said second conductive resin part therein.

4. The optical deflecting element according to claim 1 or claim 2, wherein:
said movable part has a coil formed out of a conductive material thereon and said coil is electrically connected to said second conductive resin part.

5. The optical deflecting element according to claim 1 or claim 2, wherein:
said soft resin component is formed by punching technology.

6. The optical deflecting element according to claim 1 or claim 2, wherein:
said soft resin component is formed by molding technology.

7. The optical deflecting element according to claim 1 or claim 2, wherein:
said soft resin component is constituted by utilizing a plurality of molds such that said second conductive resin part is continuously molded on said first insulating resin part after said first insulating resin part is molded.

8. The optical deflecting element according to any one of claims 1 to 7, wherein:
said reflector plate is formed out of a silicon substrate or a glass substrate.

9. The optical deflecting element according to claim 8, wherein:
holes or through holes are formed on said reflector plate;
protruded portions are formed on said soft resin component; and
said reflector plate is appropriately positioned by mating said holes or said through holes formed on said reflector plate with said protrusions formed on said soft component.

10. An optical deflecting element comprising:
a base component;
a soft resin component comprising a fixed part adhered to said base component and a movable part supported by said fixed part via a pair of beams;
a magnetic component adhered on to said movable part;
a reflector plate adhered on to said magnetic component or said movable part; and
a substrate having a coil therein adhered to said base component.

11. The optical deflecting element according to claim 10, wherein:
said soft resin component is formed out of silicone rubber.

12. The optical deflecting element according to claim 10, wherein:
said soft resin component is formed by punching technology.

13. The optical deflecting element according to claim 10, wherein:
said soft resin component is formed by molding technology.

14. The optical deflecting element according to claim 10, wherein:
said reflector plate is formed out of a silicon substrate or a glass substrate.
